# EUROPEAN PATENT SPECIFICATION

(11) **EP 0 611 904 B1**
(45) Date of publication and mention of the grant of the patent: **10.12.1997**
(21) Application number: 94101485.4
(22) Date of filing: 01.02.1994
(51) Int. Cl.: F16J 15/32

(54) **Rotary shaft seal with a protection and centering element**
Radialwellendichtung mit einem Schutz- und Zentrierelement
Bague d'étanchéité à lêvre munie d'un élément de protection et de centrage

(30) Priority: 02.02.1993 IT TO930020 U
(43) Date of publication of application: 24.08.1994
(73) Proprietor: RFT S.p.A., 10128 Torino (IT)
(72) Inventor: Viazzi, Roberto, I-10139 Torino (IT)
(74) Representative: Plebani, Rinaldo

(56) References cited:
- EP-A- 0 289 148
- US-A- 4 376 541
- US-A- 4 861 045

## Description

The present invention relates to a seal for rotary shaft seats, fittable to rotary shafts for effecting a low-friction sliding seal, and featuring, for the sealing portion, a centering and protection element forming an integral part of the seal itself.

Rotary shaft seals generally comprise a metal support for fitment inside the shaft seat; and an elastomeric element cured on to the support and having one or more annular sealing lips designed, with a small amount of interference, to mate with and effect a sliding seal on the outer lateral surface of the shaft, for which purpose the lip may present pressure elements such as garter springs or similar.

When seating the seal and/or shaft, relative axial slide is incurred between the seal and shaft, which, particularly if they are not perfectly centered, may cause irreparable damage to the sealing lip, thus impairing the efficiency or, at any rate, reducing the working life of the seal. Moreover, any off-centering between the seal and shaft may result in severe in-service friction and localized leakage. To overcome the above drawbacks, seals are known to be fitted with protection and centering elements consisting of disposable rigid sleeves, which are fitted to the sealing lip/s and eliminated using special tools during assembly.

The above solution, however, presents several drawbacks. By virtue of not forming part of the seal, the protective sleeve must be preassembled, thus increasing assembly cost; being a disposable element, the sleeve not only increases the unit cost of the seal, but also creates disposal problems at the seal-shaft assembly stage; the assembly operation itself requires the use of special tools; and, last but not least, the solution itself is not always feasible, particularly when space is limited.

An alternative solution is known from EP-A-0289148, which shows a seal according to the features of the preamble of claim 1. This known arrangement appears however to be bulky and difficult to assemble.

It is an object of the present invention to provide a rotary shaft seal featuring a sealing lip protection element designed to overcome the aforementioned drawbacks, and which in particular, by virtue of forming an integral part of the seal, may be applied cheaply and effectively in all cases.

According to the present invention, there is provided a seal for the seat of a rotary shaft, the seal comprising a metal support; an elastomeric element cured on to the support and having at least one annular sealing lip; and an element for protecting and centering the sealing lip; said protection and centering element consisting of a dust ring forming an integral part of the seal and interference fittable to the shaft so as to rotate, in use, angularly integral therewith; the seal having the characteristics as claimed in Claim 1.

In particular, the sealing lip of the seal defines a shaft mating and insertion hole larger in diameter than a corresponding shaft mating and insertion hole defined radially inwards by the dust ring.

As such, the dust ring may be fitted easily, cheaply and permanently to the support, so as to form an integral, inseparable part of the seal. What is more, it is housed loosely, and hence free to move, inside the channel seat; and, by virtue of presenting a smaller diameter shaft mating hole as compared with the sealing lip/s, it provides for preventing the sealing lip/s from sliding over the shaft when seating the seal (or shaft), and, above all, for centering the entire seal in relation to the shaft. Once the seal is assembled and the protection and centering function of the dust ring completed, the dust ring (unlike currently used disposable protection elements) provides for further protecting the sealing lip/s, this time against external pollutants, by remaining angularly secured by friction to the shaft with which it therefore rotates, thus providing for a spinning action which enhances the efficiency of the seal as a whole and increases its working life by protecting the elastomeric sealing element. Finally, assembly of the seal is simplified, requires no special tools, and poses no disposal problems.

A non-limiting embodiment of the present invention will be described by way of example with reference to the accompanying drawings, in which:
Figure 1 shows a shaft seat featuring a seal in accordance with the present invention;
Figure 2 shows a larger-scale radial section of a portion of the seal according to the present invention, the portion not shown being symmetrical;
Figures 3 and 4 show schematic views to different scales of two possible variations of a detail of the Figure 1 and 2 seal.

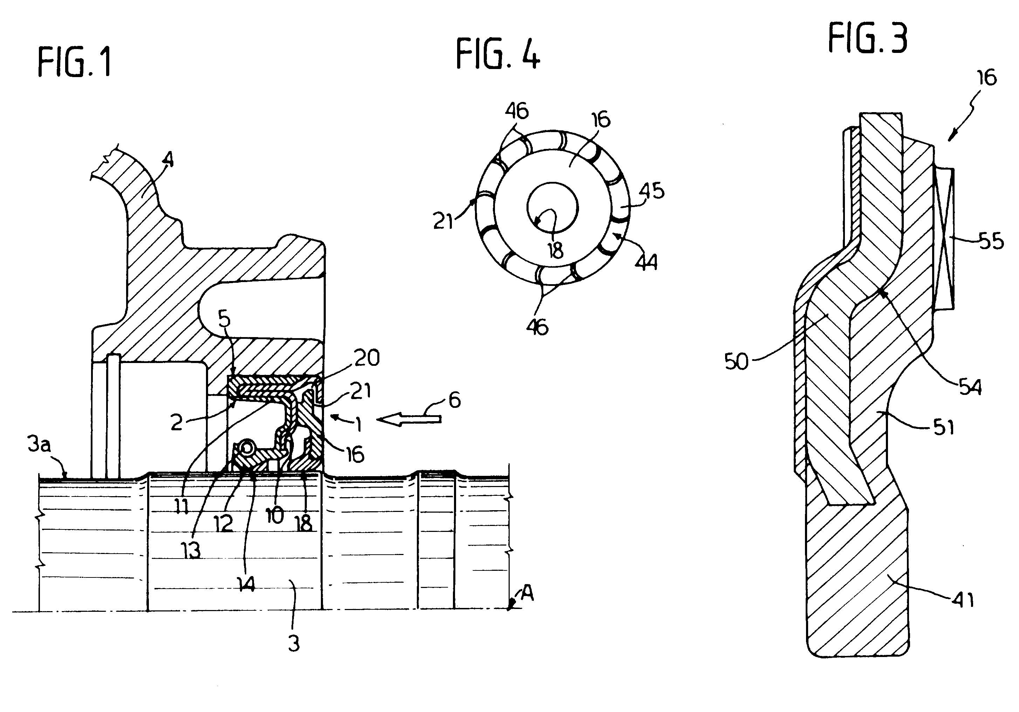

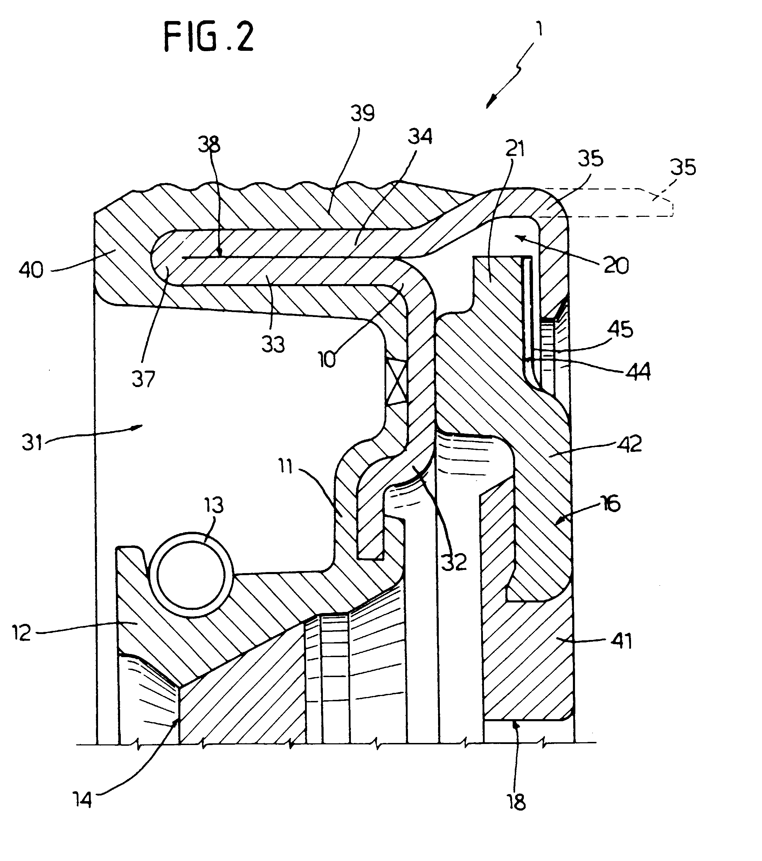

Number 1 in Figures 1 and 2 indicates a seal for the seat 2 of a rotary shaft 3 (both shown schematically). Seat 2 may be the seat on an engine block (or any support) 4 for the passage of shaft 3, e.g. the drive shaft of an internal combustion engine; though the following description obviously also applies to elements 3, 4 consisting, for example, of the inner and outer rings of a rolling bearing, or any two mechanical parts rotating in relation to each other.

Whichever the case, seat 2 presents an axial stop shoulder 5 for seal 1, defining the end of seat 2 and hence the only insertion direction of seal 1 inside seat 2, as shown by arrow 6 in Figure 1. Here and hereinafter, anything facing shoulder 5 (or moving in the direction of arrow 6) is to be understood as facing "inwards" of shaft seat 2; and anything facing the opposite way (or moving in the opposite direction to arrow 6) is to be understood as facing "outwards" of shaft seat 2.

Seal 1 comprises a metal support 10; and an elastomeric element 11 cured on to support 10 and having one or more annular sealing lips 12 designed, in use, to cooperate in sliding and fluidtight manner with the outer lateral surface 3a of shaft 3. In the non-limiting example shown, element 11 comprises one lip 12 with a V-shaped radial section and fitted radially outwards (i.e. on the opposite side to shaft 3) with a known garter spring 13. More specifically (Figure 2), lip 12 defines, radially towards the axis of symmetry A of seal 1 coincident with the rotation axis of shaft 3, a hole 14 for fitment and insertion of shaft 3.

According to the present invention, seal 1 also comprises a dust ring 16 mounted and designed, as described later on, to act as a protection and centering element for sealing lip 12. Ring 16 defines, radially inwards towards axis A, a hole 18 for fitment and insertion of shaft 3, and which, according to the present invention, is smaller in diameter than the corresponding hole 14 defined by lip 12, and in any case smaller in diameter than shaft 3. By means of hole 18, ring 16 is thus interference fittable to shaft 3 and, in use, remains angularly integral with, and hence rotates together with shaft 3.

Ring 16 is housed idly and in axially slack manner inside an annular channel-shaped seat 20 facing axis A and formed integral with support 10. Seat 20 is located axially outwards in relation to sealing lip 12 in the insertion direction of seal 1 inside shaft seat 2, i.e. is formed on the opposite side of support 10 to shoulder 5, so as to maintain ring 16 closer to the inlet of seat 2 as compared with lip 12. Seat 20 is engaged by the peripherally outer edge 21 of ring 16, so that ring 16 is nonwithdrawable and forms one piece with and an integral part of seal 1.

Support 10 is in the form of a cup-shaped body 31 with its concavity facing away from ring 16, and comprises a first flange portion 32 defining the end wall of cup-shaped body 31; and a sleeve portion 33 projecting in the insertion direction inside shaft seat 2 (i.e. away from ring 16), and perpendicular to flange portion 32 which presents elastomeric element 11 radially inwards in the insertion direction inside shaft seat 2, i.e. on the opposite face to ring 16.

Support 10 also comprises a second flange portion 34 located peripherally outwards of sleeve portion 33, on the opposite side to portion 32, bent 180° about a bend 37 on to and parallel to portion 33 (and axis A), and defining, with portion 33, a lateral wall 38 of cup-shaped body 31, for enabling fitment of body 31 and seal 1 as a whole to shaft seat 2.

According to the present invention, channel seat 20 of ring 16 is defined by the L-shaped edge 35 of flange portion 34. Support 10 in fact is made of relatively rigid but permanently deformable material, and is formed with edge 35 parallel to portions 33, 34, as shown by the dotted line in Figure 2. Subsequently, after curing element 11 and fitting ring 16 (produced separately) on to portion 32, on the opposite side to element 11, edge 35 is bent 90° in known manner, e.g. rolled, so as to extend parallel to portion 32 and so lock ring 16.

According to the preferred embodiment shown, elastomeric element 11 extends on the same side (i.e. the opposite side to ring 16) of all three portions 32, 33, 34 of support 10, so that lateral wall 38 of cup-shaped body 31 defined by support 10 is covered by elastomeric element 11 on both the inside and outside of body 31. More specifically, on portion 34 and substantially flush with edge 35, an annular elastomeric bearing 39 with an undulated outer surface is formed, which mates frictionally and in fluidtight manner with the inside of seat 2, and, at bend 37, forms a shoulder 40 designed to cooperate, in use, with shoulder 5.

As shown in Figure 2, dust ring 16 comprises a first radially-inner annular portion 41 made of elastomeric material so as to mate frictionally with shaft 3; and a second radially-outer annular portion 42 having edge 21 and made of relatively rigid material, preferably synthetic plastic such as polyamide, capable of rotating with very little friction inside seat 20.

With reference also to Figures 3 and 4, face 44 of ring 16, facing the opposite way to the insertion direction of seal 1 inside shaft seat 2, i.e. on the opposite side to flange portion 32, presents coils 45 designed, in use, to spin off any pollutant substances. In the Figure 4 variation, coils 45 are defined, in the example shown, by a number of turbine type blades 46 arranged in a ring and formed in one piece with portion 42. In the larger-scale variation shown in Figure 3, on the other hand, ring 16 comprises a rigid insert 50 to which is cured an elastomeric element 51 projecting radially from insert 50 towards axis A so as to form a portion 41 mating with shaft 3, and extending over face 54 of insert 50, on the opposite side to support 10, so as to cover and form on face 54 a number of tabs 55.

In all cases, once ring 16 is fitted to support 10 as described above, seal 1 is fitted to shaft 3 by inserting the shaft through holes 14, 18. Since hole 18 is smaller than hole 14, it is ring 16 which undergoes the wear produced by sliding over surface 3a during assembly, thus preserving lip 12; and, being assembled coaxial with support 10 and lip 12, but with a certain freedom of movement, ring 16 also provides for centering lip 12 and seal 1 as a whole on shaft 3. After assembly, the interference fit with shaft 3 results in ring 16, in use, being rotated in relation to seat 20 and the rest of seal 1, so that any external pollutants come into contact with face 44 (or 54) of ring 16 and are spun outwards, which spinning action, for a given rotation speed, is enhanced by coils 45. Finally, ring 16 provides for retaining grease close to lip 12, thus improving sealing performance, reducing friction, and extending the working life of seal 1.

## Claims

1. A seal (1) for the seat (2) of a rotary shaft (3), the seal comprising a metal support (10); an elastomeric element (11) cured on to the support (10) and having at least one annular sealing lip (12); and an element (16) for protecting and centering the sealing lip (12); said protection and centering element consisting of a dust ring (16) forming an integral part of the seal and interference fittable to the shaft (3) so as to rotate, in use, angularly integral therewith; said ring (16) being housed idly and in axially slack manner inside an annular channel seat (20) formed integral with the support (10) and engaged by the peripherally outer edge (21) of the ring (16); said channel seat (20) being located axially outwards in relation to the sealing lip (12) in the insertion direction of the seal (1) inside the shaft seat (2);
**characterized in that** said support (10) is in the form of a one-piece cup-shaped body (31), and comprises a radially extending first flange portion (32) defining the end wall of the cup-shaped body and provided with said elastomeric element (11) axially inwards in the insertion direction inside the shaft seat (2); a sleeve portion (33) projecting axially in the insertion direction inside the shaft seat (2), and perpendicular to said first flange portion (32); and an axially extending second flange portion (34) located radially outwards in relation to the sleeve portion (33), and bent 180° on to the sleeve portion (33) so as to define with it a lateral wall (38) of the cup-shaped body (31), for fitment to the shaft seat (2); and
**in that** said channel seat (20) for the dust ring (16) is defined by the free edge (35) of said second flange portion (34), wherein said free edge is L-shaped and located axially outwrds in relation to the said first flange portion (32) in the insertion direction of the seal.

2. A seal (1) as claimed in Claim 1, characterized by the fact that said sealing lip (12) defines a shaft mating and insertion hole (14) larger in diameter than a corresponding shaft mating and insertion hole (18) defined radially inwards by said dust ring (16).

3. A seal (1) as claimed in Claim 1 or 2, characterized by the fact that said elastomeric element (11) extends over the same side of all three said portions (32, 33, 34) of the support (10), so that the lateral wall (38) of the cup-shaped body (31) defined by the support (10) is covered with the elastomeric element (11) on both the inside and outside of the cup-shaped body (31).

4. A seal (1) as claimed in one of the foregoing Claims, characterized by the fact that said dust ring (16) comprises a first radially-inner annular portion (41) made of elastomeric material for mating with the shaft (3); and a second radially-outer portion (42; 50) made of relatively rigid material, preferably synthetic plastic.

5. A seal (1) as claimed in Claim 4, characterized by the fact that the face (44; 54) of the dust ring (16) facing the opposite way to the insertion direction of the seal inside the shaft seat (2) presents coils (45) for spinning off, in use, any pollutant substances.

## Patentansprüche

1. Dichtung (1) für den Sitz (2) einer Drehwelle (3), wobei die Dichtung folgendes umfaßt: eine Metallstütze (10); ein an der Stütze (10) ausgehärtetes elastomeres Element (11) mit mindestens einer ringförmigen Dichtlippe (12); und ein Element (16) zum Schutz und Zentrieren der Dichtlippe (12); wobei das Schutz- und Zentrierelement aus einem Staubschutzring (16) besteht, der einen Bestandteil der Dichtung bildet und mit Preßpassung an der Welle (3) angebracht werden kann, so daß er sich im Gebrauch winkelförmig einstückig damit dreht; wobei der Ring (16) lose und mit Axialspiel in einem einstückig mit der Stütze 10 ausgebildeten ringförmigen Kanalsitz (20) untergebracht ist, der von dem umfangsmäßig äußeren Rand (21) des Rings (16) in Eingriff genommen wird; wobei der Kanalsitz (20) bezüglich der Dichtlippe (12) in Einführungsrichtung der Dichtung (1) in den Wellensitz (2) axial nach außen angeordnet ist;
dadurch gekennzeichnet, daß die Stütze (10) in Form eines einstückigen schalenförmigen Körpers (31) vorliegt und einen sich radial erstreckenden ersten Flanschteil (32), der die Endwand des schalenförmigen Körpers definiert und in Einführungsrichtung in den Wellensitz (2) axial nach innen mit dem elastomeren Element (11) versehen ist; einen Hülsenteil (33), der in Einführungsrichtung in den Wellensitz (2) axial und zum ersten Flanschteil (32) senkrecht hervorsteht; und einen sich axial erstreckenden zweiten Flanschteil (34), der bezüglich des Hülsenteils (33) radial nach außen angeordnet und um 180° so an den Hülsenteil (33) gebogen ist, daß er damit eine Seitenwand (38) des schalenförmigen Körpers (31) zur Anordnung an dem Wellensitz (2) definiert; aufweist, und
daß der Kanalsitz (20) des Staubschutzrings (16) durch den freien Rand (35) des zweiten Flanschteils (34) definiert wird, wobei der freie Rand L-förmig ist und sich bezüglich des ersten Flanschteils (32) in Einführungsrichtung der Dichtung axial nach außen befindet.

2. Dichtung (1) nach Anspruch 1, dadurch gekennzeichnet, daß die Dichtlippe (12) ein mit der Welle zusammenpassendes Loch (14) zur Einführung der Welle definiert, dessen Durchmesser größer als der eines entsprechenden mit der Welle zusammenpassenden Lochs (18) zur Einführung der Welle ist, das durch den Staubschutzring (16) radial nach innen definiert wird.

3. Dichtung (1) nach Anspruch 1 oder 2, dadurch gekennzeichnet, daß sich das elastomere Element (11) derart über die gleiche Seite aller drei Teile (32, 33, 34) der Stütze (10) erstreckt, daß die Seitenwand (38) des durch die Stütze (10) definierten schalenförmigen Körpers (31) sowohl innerhalb als auch außerhalb des schalenförmigen Körpers (31) mit dem elastomeren Element (11) bedeckt ist.

4. Dichtung (1) nach einem der vorhergehenden Ansprüche, dadurch gekennzeichnet, daß der Staubschutzring (16) einen ersten radial innenliegenden ringförmigen Teil (41) aus elastomerem Material zum Eingriff mit der Welle (3) und einen zweiten radial außenliegenden Teil (42; 50) aus relativ starrem Material, vorzugsweise synthetischem Kunststoff, umfaßt.

5. Dichtung (1) nach Anspruch 4, dadurch gekennzeichnet, daß die Fläche (44; 54) des Staubschutzrings (16), die in die der Einführungsrichtung der Dichtung in den Wellensitz (2) entgegengesetzte Richtung weist, Windungen (45) zum Wegschleudern jeglicher Verunreinigungsstoffe im Gebrauch aufweist.

## Revendications

1. Un joint d'étanchéité (1) destiné au siège (2) d'un arbre rotatif (3), le joint d'étanchéité comprenant: un support métallique (10); un élément élastomère (11) vulcanisé ou polymérisé sur le support (10) et ayant au moins une lèvre d'étanchéité (12) annulaire; et un élément (16) servant à protéger et à centrer la lèvre d'étanchéité (12); ledit élément de protection et de centrage consistant en une bague anti-poussière (16) faisant partie intégrante du joint d'étanchéité et pouvant être montée avec interférence sur l'arbre (3) de manière à tourner, en service, en étant angulairement solidaire de ce dernier; ladite bague (16) étant logée à rotation libre et de manière axialement lâche à l'intérieur d'un siège de canal (20) annulaire, formé monobloc avec le support (10) et engagé par le bord périphériquement extérieur (21) de la bague (16); ledit siège de canal (20) étant disposé axialement à l'extérieur par rapport à la lèvre d'étanchéité (12) dans la direction d'insertion du joint d'étanchéité (1) à l'intérieur du siège d'arbre (2);
caractérisé en ce que ledit support (10) se présente sous la forme d'un corps monobloc (31) en forme de coupelle et comprend une première partie de bride (32) s'étendant radialement, définissant la paroi d'extrémité du corps en forme de coupelle et pourvu dudit élément élastomère (11) axialement vers l'intérieur dans la direction d'insertion dans le siège d'arbre (2); une partie de manchon (33) faisant saillie axialement dans la direction d'insertion dans le siège d'arbre (2) et perpendiculairement à ladite première partie de bride (32); et une deuxième partie de bride (34) s'étendant axialement, disposée radialement à l'extérieur par rapport à la partie de manchon (33) et repliée à 180° sur la partie de manchon (33), de manière à définir, avec cette dernière, une paroi latérale (38) du corps (31) en forme de coupelle, pour le montage sur le siège d'arbre (2) ; et
en ce que ledit siège de canal (20) destiné à la bague anti-poussière (16) est défini par le bord libre (35) de ladite deuxième partie de bride (34), ledit bord libre étant en forme de L et disposé axialement à l'extérieur par rapport à ladite première partie de bride (32) dans la direction d'insertion du joint d'étanchéité.

2. Un joint d'étanchéité (1) selon la revendication 1, caractérisé par le fait que ladite lèvre d'étanchéité (12) définit un passage (14) de contact avec l'arbre et d'insertion de l'arbre (18) ayant un diamètre supérieur à celui d'un passage correspondant de contact avec l'arbre, qui est défini radialement vers l'intérieur par ladite bague anti-poussière (16).

3. Joint d'étanchéité (1) selon la revendication 1 ou 2, caractérisé par le fait que ledit élément élastomère (11) s'étend sur le même côté desdites trois parties (32, 33, 34) du support (10), de manière que la paroi latérale (38) du corps (31) en forme de coupelle, définie par le support (10) soit recouverte par l'élément élastomère (11) à la fois sur la partie intérieure et extérieure du corps (31) en forme de coupelle.

4. Joint d'étanchéité (1) selon l'une des revendications précédentes, caractérisé par le fait que ladite bague anti-poussière (16) comprend une première partie annulaire (41) radialement intérieure, en matériau élastomère, pour venir en contact avec l'arbre (3); et une deuxième partie (42; 50) radialement extérieure réalisée en matériau relativement rigide, de préférence une matière plastique synthétique.

5. Joint d'étanchéité (1) selon la revendication 4, caractérisé par le fait que la face (44; 54) de la bague anti-poussière (16), tournée à l'opposé de la direction d'insertion du siège dans le siège d'arbre (2), présente des bobines ou rouleaux(45) servant à éliminer par centrifugation, en service, toute substance polluante.
